# EUROPÄISCHE PATENTSCHRIFT

(11) **EP 2 997 872 B1**
(45) Veröffentlichungstag und Bekanntmachung des Hinweises auf die Patenterteilung: **28.06.2017**
(21) Anmeldenummer: 14003267.3
(22) Anmeldetag: 20.09.2014
(51) Int. Cl.: A47L 9/14, A01D 34/00, A47L 9/00

(54) **Selbstfahrendes Arbeitsgerät**
Self-propelled work device
Équipement automobile

(43) Veröffentlichungstag der Anmeldung: 23.03.2016
(73) Patentinhaber: Viking GmbH, 6336 Langkampfen (AT)
(72) Erfinder: Gottinger, Clemens, 6330 Kufstein (AT); Auer, Gerhard, 5090 Lofer (AT); Eidherr-Schmid, Herbert, 6330 Kufstein (AT)
(74) Vertreter: Reinhardt, Annette

(56) Entgegenhaltungen:
- EP-A1- 2 412 219
- EP-A1- 2 417 894
- WO-A1-02/071175
- DE-U1-202010 008 414

## Beschreibung

Die Erfindung betrifft ein selbstfahrendes Arbeitsgerät der im Oberbegriff des Anspruchs 1 angegebenen Gattung.

Aus der EP 2 417 894 A1 ist ein selbstfahrendes Arbeitsgerät, nämlich ein selbstfahrender Staubsauger bekannt. Der Staubsauger besitzt einen Aufnahmebehälter für Schmutz, der in einem von einer Klappe verschlossenen Raum angeordnet ist. Um die geöffnete Stellung der Klappe zu erkennen, ist ein Schalter vorgesehen, der bei vollständig geöffneter Klappe betätigt ist. Dabei wirkt ein Lagerarm der Klappe auf den Schalter, der ins Innere des Gehäuses des Staubsaugers ragt. Durch die Öffnung im Gehäuse, durch die der Gelenkarm ragt, kann Schmutz ins Gehäuse gelangen. Der Schalter kann außerdem nur die vollständig geöffnete Stellung der Klappe detektieren. Eine teilweise geöffnete Stellung wird nicht erkannt.

Der Erfindung liegt die Aufgabe zugrunde, ein selbstfahrendes Arbeitsgerät der gattungsgemäßen Art zu schaffen, das eine geringe Schmutzanfälligkeit besitzt und die Erkennung einer teilweise geöffneten Klappe ermöglicht.

Diese Aufgabe wird durch ein selbstfahrendes Arbeitsgerät mit den Merkmalen des Anspruchs 1 gelöst.

Es ist vorgesehen, dass die Schwenkstellung der Klappe mit einem ersten Hallsensor überwacht wird. Der Hallsensor ist in dem Gehäuse des Arbeitsgerätes angeordnet und dadurch vor Verschmutzungen geschützt. Das Gehäuse kann dabei im Bereich des Hallsensors vollständig geschlossen ausgebildet sein, da der Hallsensor eine kontaktlose Ermittlung der Schwenkstellung der Klappe ermöglicht. Am Lagerabschnitt der Klappe ist mindestens ein erster Magnet angeordnet, der sich beim Verschwenken der Klappe um die Schwenkachse der Klappe dreht und dessen Magnetfeld von dem ersten Hallsensor erfasst wird. Durch die Anordnung des ersten Magnets am Lagerabschnitt der Klappe ändert sich der Abstand zwischen dem ersten Magnet und dem Hallsensor beim Verschwenken der Klappe nicht oder nur geringfügig. Der Abstand kann dabei vergleichsweise klein sein. Dadurch kann das Magnetfeld des ersten Magnets in jeder Schwenklage der Klappe von dem ersten Hallsensor erfasst und ausgewertet werden. Durch das Verschwenken des ersten Magnets ändert sich die Ausrichtung des Magnetfelds und dadurch die vom ersten Hallsensor gemessene Feldstärke des Magnetfelds des ersten Magneten. Das Magnetfeld des ersten Magnets ist jedoch in jeder Stellung der Klappe von dem ersten Hallsensor detektierbar. Auch die Erkennung einer teilweise geöffneten Klappe ist bei dieser Anordnung möglich.

Vorteilhaft ist am Gehäuse eine Stopptaste angeordnet. Die Stopptaste dient dazu, das Arbeitsgerät anzuhalten. Besitzt das Arbeitsgerät ein Werkzeug, kann beim Betätigen der Stopptaste alternativ oder zusätzlich das Werkzeug angehalten werden. Die Position der Stopptaste wird vorteilhaft von einem im Gehäuse angeordneten zweiten Hallsensor überwacht. An der Stopptaste ist dabei vorteilhaft mindestens ein zweiter Magnet gehalten, dessen Magnetfeld von dem zweiten Hallsensor erfasst wird. Auch der zweite Hallsensor ist durch die Anordnung im Gehäuse vor Verschmutzungen geschützt. Die Stopptaste kann vollständig außerhalb des Gehäuses angeordnet sein, da das Magnetfeld des zweiten Magneten durch die Wand des Gehäuses hindurch vom zweiten Hallsensor erfasst werden kann. Der zweite Magnet besitzt zum ersten Magnet vorteilhaft einen Abstand von weniger als 5 cm. Dadurch ergibt sich eine geringe Baugröße des Arbeitsgeräts. Die Stopptaste kann in geringem Abstand zum Lagerabschnitt der Klappe und damit zu den durch die Klappe abgedeckten Bedienelementen angeordnet werden. Beim Betätigen der Stopptaste wird vorteilhaft der Abstand des zweiten Magneten zum zweiten Hallsensor verändert, insbesondere verringert. Dadurch, dass der erste Magnet beim Verschwenken der Klappe verschwenkt wird und der zweite Magnet von dem zweiten Hallsensor entfernt oder zu ihm bewegt wird, ergeben sich unterschiedliche, am ersten Hallsensor und am zweiten Hallsensor gemessene Signalstärken und Signaländerungen. Dadurch, dass die Signale unterschiedlich sind, können die beiden Magnete und auch die beiden Hallsensoren jeweils in sehr geringem Abstand zueinander angeordnet werden. Vorteilhaft sind der erste Hallsensor und der zweite Hallsensor auf einer gemeinsamen Platine im Gehäuse angeordnet. Dadurch ergibt sich ein einfacher Aufbau. Für die Sensoren wird lediglich eine einzige Platine benötigt.

Vorteilhaft besitzt die Stopptaste einen Abschnitt, der den Lagerabschnitt der Klappe mindestens teilweise übergreift. Dadurch ist das Schwenklager der Klappe mindestens teilweise abgedeckt. Das Schwenklager der Klappe umfasst vorteilhaft eine Aufnahme am Gehäuse, die eine Öffnung aufweist, über die der Lagerabschnitt in der Aufnahme montiert werden kann. Die Stopptaste deckt die Öffnung vorteilhaft mindestens teilweise ab. Über die Stopptaste wird dadurch eine Sicherung des Lagerabschnitts in der Aufnahme erreicht.

Vorteilhaft umfasst das Arbeitsgerät eine beweglich gelagerte Haube, deren Position über mindestens eine im Gehäuse angeordnete Erfassungseinrichtung überwacht wird. Die Erfassungseinrichtung kann dazu dienen, zu ermitteln, ob das Arbeitsgerät an einem Hindernis angestoßen ist. Die Erfassungseinrichtung umfasst vorteilhaft mindestens einen dritten Hallsensor. Der dritte Hallsensor dient insbesondere dazu, den Abstand der Haube zum Gehäuse zu erfassen. An der Haube ist vorteilhaft ein dritter Magnet angeordnet, dessen Magnetfeld von den Hallsensoren der Erfassungseinrichtung erfasst wird. Besonders bevorzugt umfasst die Erfassungseinrichtung einen dritten, einen vierten und einen fünften Hallsensor. Dadurch können Bewegungen der Haube in alle Richtungen ausreichend genau erfasst werden. Es wird nicht nur erfasst, ob das Arbeitsgerät an einem Hindernis anstößt, sondern auch, in welcher Richtung dieses Hindernis liegt. Vorteilhaft ist der mindestens dritte Hallsensor auf der gemeinsamen Platine des ersten Hallsensors und des zweiten Hallsensors angeordnet. Auch ein vierter und/oder ein fünfter Hallsensor der Erfassungseinrichtung sind vorteilhaft auf der gemeinsamen Platine angeordnet. Dadurch wird lediglich eine einzige Platine für die Hallsensoren benötigt. Durch die Anordnung des ersten Magneten am Schwenklager der Klappe können alle Hallsensoren vergleichsweise nah zueinander angeordnet werden, so dass die Platine mit geringen Abmessungen ausgeführt werden kann.

Vorteilhaft ist der Lagerabschnitt an mindestens zwei Lagerstellen schwenkbar gelagert, und der erste Magnet ist zwischen den beiden Lagerstellen angeordnet. Dadurch ist die Position des Magneten vergleichsweise genau festgelegt. Ein einfacher Aufbau ergibt sich, wenn der Lagerabschnitt eine Vertiefung aufweist, in der der erste Magnet angeordnet ist. Der Lagerabschnitt ist insbesondere als Lagerwelle ausgebildet. Die Klappe ist vorteilhaft in Richtung auf ihre geöffnete Stellung gefedert gelagert. Wird die Klappe nur teilweise geöffnet, so wird die Klappe von der Feder in ihre vollständig geöffnete Stellung verstellt. Dadurch kann weitgehend vermieden werden, dass die Klappe in Zwischenstellungen stehen bleibt. Für den Bediener ist dadurch leicht erkennbar, wenn die Klappe nicht vollständig geschlossen ist. Zur Festlegung der vollständig geöffneten Stellung der Klappe ist vorteilhaft am Lagerabschnitt ein Anschlag ausgebildet, der mit dem Gehäuse zusammenwirkt. Zwischen der vollständig geschlossenen Stellung und der vollständig geöffneten Stellung legt die Klappe zweckmäßig einen Schwenkwinkel von etwa 70° bis etwa 110° zurück. Bei nicht vollständig geschlossener Klappe wird vorteilhaft der Fahrantrieb und/oder eine Antriebseinrichtung für mindestens ein Werkzeug des Arbeitsgeräts ausgeschaltet. Dadurch ist vermieden, dass sich das Arbeitsgerät bei nicht vollständig geschlossener Klappe bewegt oder dass die Antriebseinrichtung mindestens ein Werkzeug des Arbeitsgeräts antreibt. Die Klappe ist insbesondere zur Abdeckung von Bedienelementen des Arbeitsgeräts vorgesehen. Wenn der Bediener die Klappe geöffnet hat, um die Bedienelemente zu bedienen, sind der Fahrantrieb und die Antriebseinrichtung vorteilhaft ausgeschaltet.

Ein Ausführungsbeispiel der Erfindung wird im Folgenden anhand der Zeichnung erläutert. Es zeigen:
- Fig. 1: eine perspektivische Darstellung eines Arbeitsgeräts,
- Fig. 2: das Arbeitsgerät aus Fig. 1 mit abgenommener Haube,
- Fig. 3: einen schematischen Längsschnitt durch das Arbeitsgerät aus Fig. 1,
- Fig. 4: einen vergrößerten Ausschnitt aus Fig. 3 im Bereich der Klappe,
- Fig. 5: einen vergrößerten Ausschnitt aus Fig. 3 im Bereich der Stopptaste,
- Fig. 6: eine perspektivische Schnittdarstellung des Bereichs der Stopptaste,
- Fig. 7: einen Schnitt entsprechend Fig. 5 bei betätigter Stopptaste,
- Fig. 8: eine Schnittdarstellung des Lagerbereichs der Klappe bei geöffneter Klappe,
- Fig. 9: einen Schnitt durch einen Anschlag am Lagerabschnitt bei geöffneter Klappe,
- Fig. 10: eine perspektivische Darstellung des Gehäuses mit einem daran angeordneten ersten Teil der Klappe,
- Fig. 11: eine perspektivische Darstellung im Bereich des Lagerabschnitts der Klappe,
- Fig. 12 und 13: perspektivische Ansichten des ersten Teils der Klappe,
- Fig. 14 und 15: perspektivische Ansichten des zweiten Teils der Klappe,
- Fig. 16: eine perspektivische Ansicht des Gehäuses im Bereich der Stopptaste,
- Fig. 17 und 18: perspektivische Darstellungen der Stopptaste,
- Fig. 19: eine Draufsicht auf die Platine des Arbeitsgeräts,
- Fig. 20: ein schematisches Diagramm der Messwerte des ersten und zweiten Hallsensors in Abhängigkeit des Schwenkwinkels der Klappe.

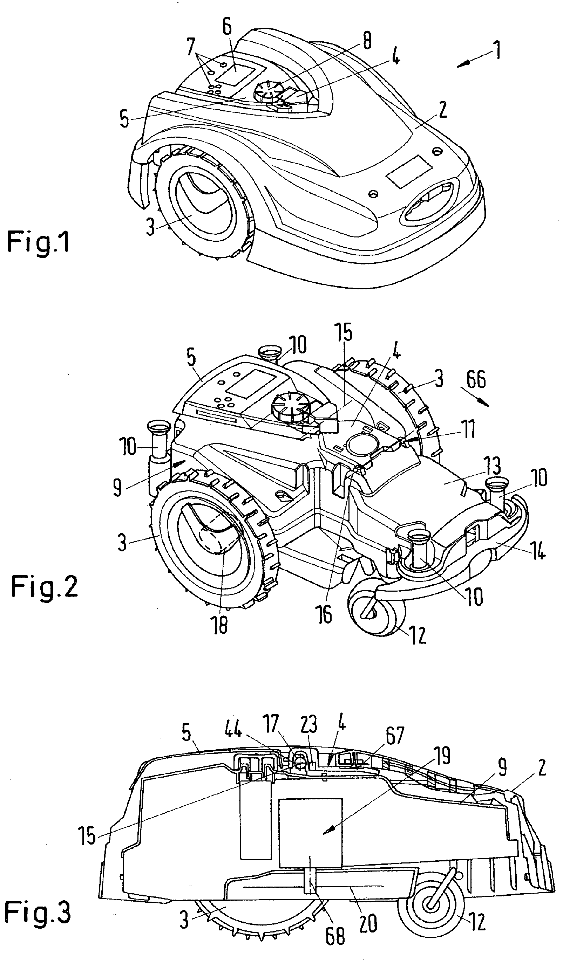

Fig. 1 zeigt ein selbstfahrendes Arbeitsgerät 1, das als Rasenmäher ausgebildet ist. Das selbstfahrende Arbeitsgerät 1 kann auch ein anderes selbstfahrendes Arbeitsgerät, beispielsweise ein Staubsauger oder dergleichen sein. Das Arbeitsgerät 1 ist als autonomes Arbeitsgerät ausgebildet. Es fährt selbsttätig die zu bearbeitende Fläche, beispielsweise eine Rasenfläche, ab, ohne dass ein Bediener anwesend sein muss. Das Arbeitsgerät 1 besitzt eine Haube 2. Im Bereich einer Aussparung der Haube 2 sind eine Stopptaste 4 und eine Klappe 5 angeordnet. Im Ausführungsbeispiel ist die Klappe 5 durchsichtig ausgebildet. Die Klappe 5 deckt ein Display 6 sowie benachbart zum Display 6 angeordnete Bedienelemente 7 ab. Ein weiteres Bedienelement 8 dient zur Einstellung der Schnitthöhe und ist ebenfalls unter der Klappe 5 angeordnet.

Wie auch Fig. 2 zeigt, besitzt das Arbeitsgerät zwei Räder 3, die einen vergleichsweise großen Außendurchmesser besitzen und die das Arbeitsgerät 1 bewegen. Die Räder 3 sind von einem Fahrantrieb 18 angetrieben. Im Ausführungsbeispiel ist für jedes Rad 3 ein eigener Fahrantrieb 18 vorgesehen, der beispielsweise als Elektromotor, gegebenenfalls mit einem zusätzlichen Getriebe, ausgebildet sein kann. Das Arbeitsgerät 1 besitzt außerdem ein Vorderrad 12 mit kleinerem Durchmesser, das schwenkbar gelagert ist und sich so in Fahrtrichtung ausrichten kann. Das Arbeitsgerät 1 besitzt ein Gehäuse 9, an dem die Haube 2 beweglich gelagert ist. Im Ausführungsbeispiel sind zur beweglichen Lagerung der Haube 2 vier Federelemente 10 vorgesehen. Das Gehäuse 9 ist von einem Gehäuseoberteil 13 und einem Gehäuseunterteil 14 gebildet und weitgehend geschlossen ausgeführt. Dadurch sind Verschmutzungen des Inneren des Gehäuses 9 weitgehend vermieden. Am Gehäuseoberteil 13 sind an der im Betrieb oben angeordneten Seite die Klappe 5 und die Stopptaste 4 schwenkbar gelagert. Die Stopptaste 4 ist an einem Schwenklager 11 um eine Schwenkachse 16 schwenkbar gelagert. Die Klappe 5 ist um eine Schwenkachse 15 schwenkbar gelagert. Wie Fig. 2 zeigt, sind die Schwenkachsen 15 und 16 etwa parallel zueinander und im Ausführungsbeispiel etwa parallel zur Drehachse der Räder 3 ausgerichtet. Die Schwenkachse 11 liegt in Fahrtrichtung 66 des Arbeitsgeräts 1 vor der Schwenkachse 15. Die Stopptaste 4 übergreift den Bereich der Schwenkachse 15.

Wie Fig. 3 zeigt, ist im Gehäuse 9 eine Antriebseinrichtung 19 angeordnet, die vorteilhaft einen Elektromotor umfasst und die ein Werkzeug des Arbeitsgerät 1, im Ausführungsbeispiel ein Messer 20, rotierend antreibt. Die Drehachse 68 des Messers 20 steht im Betrieb bei auf dem Boden stehendem Arbeitsgerät 1 etwa senkrecht, so dass sich das Messer 20 in einer etwa horizontalen Ebene bewegt.

Wie die Schnittdarstellung in Fig. 3 auch zeigt, besitzt die Klappe 5 einen Lagerabschnitt 17, an dem die Lagerung um die Schwenkachse 15 ausgebildet ist. Die Stopptaste 4 besitzt einen Abschnitt 44, der den Lagerabschnitt 17 übergreift. Der Abschnitt 44 ist im Querschnitt etwa U-förmig ausgebildet, wobei die Schenkel des U im Ausführungsbeispiel bei auf dem Boden fahrendem Arbeitsgerät 1 nach unten weisen. Die Stopptaste 4 besitzt einen plattenförmigen Grundkörper 67, der weitgehend von der Haube 2 abgedeckt ist. Etwa in dem Bereich, in dem der Abschnitt 44 an den Grundkörper 67 anschließt, ist ein Magnet 23 an der Stopptaste 4 gehalten.

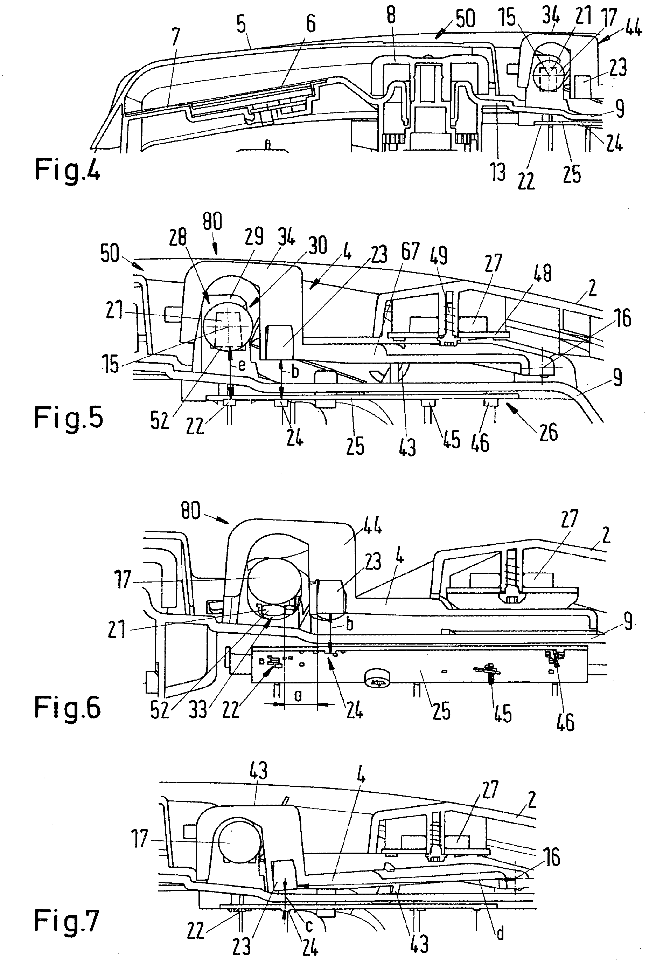

Wie die vergrößerte Darstellung in Fig. 4 zeigt, ist im Gehäuse 9 unterhalb des Gehäuseoberteils 13 eine Platine 25 angeordnet, die Hallsensoren 22 und 24 trägt. Am Lagerabschnitt 17 der Klappe 5 ist ein erster Magnet 21 angeordnet, der mit dem ersten Hallsensor 22 zusammenwirkt und dessen Magnetfeld der erste Hallsensor 22 misst. Das Magnetfeld des zweiten Magnets 23 an der Stopptaste 4 wird von dem zweiten Hallsensor 24 gemessen. Fig. 4 zeigt die Klappe 5 in ihrer geschlossenen Stellung 50. In dieser Stellung deckt die Klappe 5 das Display 6, die Bedienelemente 7 für das Display 6 sowie das Bedienelement 8 für die Höhenverstelleinrichtung des Messers 20 ab. Wie Fig. 4 auch zeigt, ist am Abschnitt 44 der Stopptaste 4 ein Betätigungsabschnitt 34 ausgebildet, der vom Bediener gedrückt werden kann. Der Betätigungsabschnitt 34 ist oberhalb des Lagerabschnitts 17 angeordnet und nicht von der Haube 2 abgedeckt.

Fig. 5 zeigt den Bereich der Stopptaste des Arbeitsgeräts 1 im Einzelnen. Der erste Magnet 21 ist im Bereich der Schwenkachse 15 angeordnet. Im Ausführungsbeispiel schneidet die Schwenkachse 15 den ersten Magneten 21 etwa mittig. Wie Fig. 5 zeigt, besitzt der erste Magnet 21 eine Stirnseite 52, die in der geschlossenen Stellung 50 der Klappe 5 dem ersten Hallsensor 22 zugewandt liegt. Die Stirnseite 52 des Magneten 21 besitzt zum ersten Hallsensor 22 einen Abstand e. Der zweite Magnet 23 besitzt zum zweiten Hallsensor 24 einen Abstand b. Im Ausführungsbeispiel ist der Abstand b deutlich kleiner als der Abstand e. Der Abstand b beträgt vorteilhaft weniger als etwa 80% des Abstands e. Die Stopptaste 4 besitzt an ihrem Grundkörper 67 ein Federelement 43, das sich am Gehäuse 9 abstützt und die Stopptaste 4 in ihre in den Figuren 4 bis 6 gezeigte unbetätigte Stellung 80 vorspannt. Wie Fig. 5 auch zeigt, ist die Klappe 5 an einem Schwenklager 28 am Gehäuse 9 gelagert.

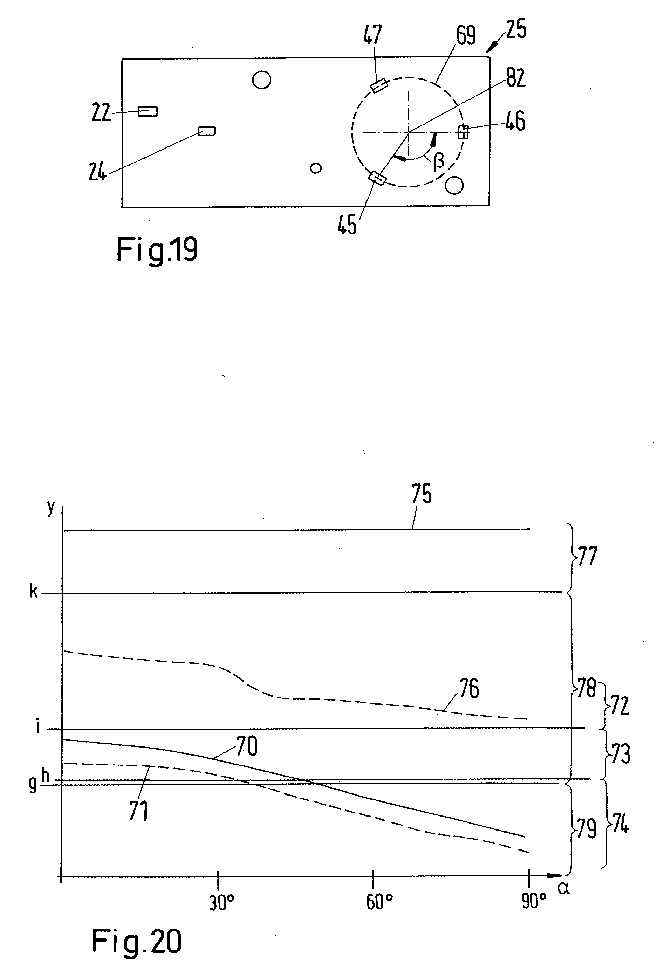

An der Haube 2 ist ein dritter Magnet 27 festgelegt. Der dritte Magnet 27 ist an der dem Gehäuse 9 zugewandten Innenseite der Haube 2 angeordnet und über eine unter dem dritten Magneten 27 angeordnete Scheibe 48 und eine Schraube 49 an der Haube 2 fixiert. Die Platine 25 besitzt weitere Hallsensoren, die im Bereich des Magneten 27 angeordnet sind. In den Darstellungen in Fig. 5 und 6 sind ein dritter Hallsensor 45 und ein vierter Hallsensor 46 sichtbar. Wie die Draufsicht auf die Platine 25 in Fig. 19 zeigt, ist zusätzlich ein fünfter Hallsensor 47 vorgesehen. Die Hallsensoren 45, 46 und 47 sind im Ausführungsbeispiel auf einem gedachten Kreis 69 angeordnet und zueinander jeweils um einen Winkel β um den Kreismittelpunkt 82 versetzt angeordnet. Im Ausführungsbeispiel beträgt der Winkel β zwischen zwei Hallsensoren 45, 46 und 47 jeweils 120°. Wird die Haube 2 parallel zur Ebene der Platine 25 bewegt, so ändert sich das an den Hallsensoren 45, 46 und 47 gemessene Magnetfeld des dritten Magneten 27. Aus der Änderung der Messwerte der Hallsensoren 45, 46 und 47 kann ermittelt werden, in welche Richtung die Haube 2 gegenüber dem Gehäuse 9 verschoben wurde. Dadurch kann die Lage eines Hindernisses, an dem das Arbeitsgerät 1 anstößt, erkannt werden. Die Hallsensoren 45, 46 und 47 bilden zusammen mit dem dritten Magneten 27 eine Erfassungseinrichtung 26 zur Erfassung der Lage der Haube 2. Wie die Figuren 5 und 19 zeigen, sind alle Hallsensoren 22, 24, 45, 46 und 47 auf der gemeinsamen Platine 25 angeordnet.

Wie Fig. 6 zeigt, besitzen die Magnete 21 und 23 nur einen geringen Abstand a zueinander. Die Magnete 21 und 23 sind dabei in Längsrichtung der Schwenkachse 15 (Fig. 5) versetzt zueinander angeordnet. Der Abstand a beträgt vorteilhaft weniger als etwa 5 cm, insbesondere weniger als etwa 3 cm. Dadurch kann die Platine 25 sehr klein ausgeführt werden, und der Betätigungsabschnitt 34 der Stopptaste 4, an dem die Stopptaste 4 bei der Betätigung den größten Schwenkweg ausführt, kann nah am Lagerabschnitt 17 angeordnet werden.

Fig. 7 zeigt die Stopptaste 4 in ihrer betätigten Stellung 81. Die Stopptaste 4 wurde beim Verstellen aus der unbetätigten Stellung 80 in die betätigte Stellung 81 um die Schwenkachse 16 verschwenkt. Der zweite Magnet 23 besitzt zur Schwenkachse 16 einen vergleichsweise großen Abstand d. Im Ausführungsbeispiel beträgt der Abstand d mehr als 5 cm, insbesondere mehr als 8 cm. Dadurch hat sich der Magnet 23 näherungsweise senkrecht zur Platine 25 bewegt. Dadurch hat sich der Abstand zwischen dem Magnet 23 und dem Hallsensor 24 auf einen Abstand c verringert. Das vom Hallsensor 24 gemessene Magnetfeld ist dadurch in betätigter Stellung 81 der Stopptaste 4 größer als in unbetätigter Stellung 80 der Stopptaste 4.

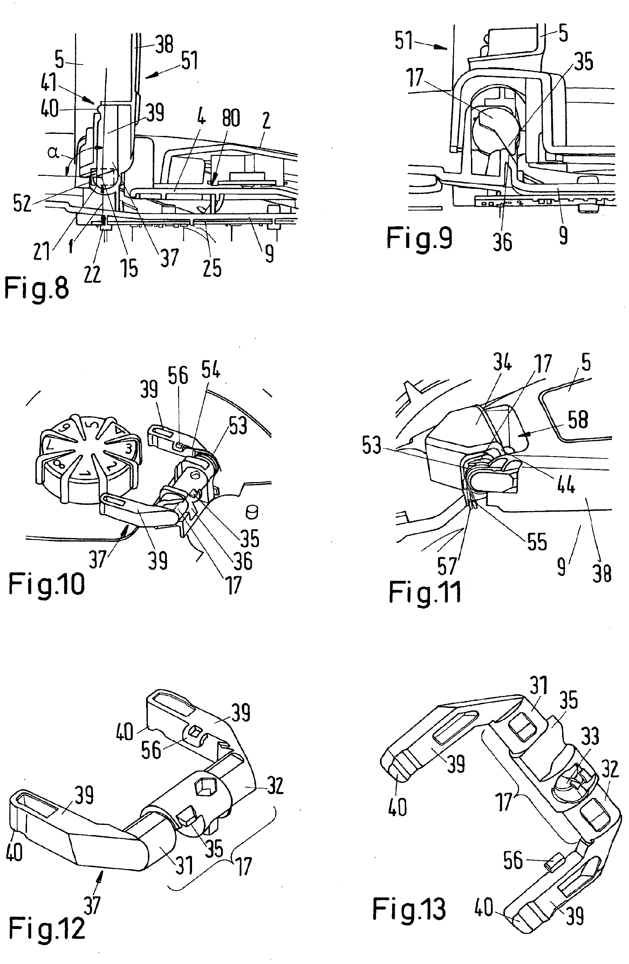

Fig. 8 zeigt die Klappe 5 in ihrer geöffneten Stellung 51 und die Stopptaste 4 in ihrer unbetätigten Stellung 80. Der erste Magnet 21 wurde beim Verschwenken der Klappe 5 in die geöffnete Stellung 51 um die Drehachse 15 gedreht. In der in Fig. 8 gezeigten geöffneten Stellung 51 besitzt der erste Magnet 21 zum ersten Hallsensor 22 einen Abstand f, der im Ausführungsbeispiel geringfügig größer als der Abstand e ist. Die Abstände e, f können auch etwa gleich sein. Wie Fig. 8 zeigt, wurde die Klappe 5 von der geöffneten Stellung 50 um einen Schwenkwinkel α in die geöffnete Stellung 51 verschwenkt. Der Schwenkwinkel α beträgt von etwa 70° bis etwa 110°, vorzugsweise von etwa 80° bis etwa 100°. Im Ausführungsbeispiel beträgt der Schwenkwinkel α näherungsweise 90°. Die Stirnseite 52 des ersten Magneten 21 liegt dem ersten Hallsensor 22 abgewandt und weist zur Seite. Dadurch ist das vom ersten Hallsensor 22 gemessene Magnetfeld des ersten Magneten 21 deutlich geringer als in der geschlossenen Stellung 50 der Klappe 5. Die Änderung des Magnetfeldes, die sich durch das Verschwenken des Magneten 21 um die Drehachse 15 ergibt, ist dabei deutlich größer als die Änderung des Magnetfeldes, die sich durch die Änderung des Abstandes b, c zwischen dem zweiten Magneten 23 und dem zweiten Hallsensor 24 ergibt. Dadurch können die Magnetfeldänderungen gut unterschieden werden, und die Magnete 21 und 23 können in sehr geringem Abstand a zueinander angeordnet werden. Entsprechend können auch die zugeordneten Hallsensoren 22 und 24 in geringem Abstand zueinander angeordnet werden.

Wie Fig. 9 zeigt, ist am Lagerabschnitt 17 ein Anschlag 35 angeordnet, der radial nach außen ragt und mit einer Anschlagfläche 36 des Gehäuses 9 zusammenwirkt, um die vollständig geöffnete Stellung 51 der Klappe 5 zu definieren.

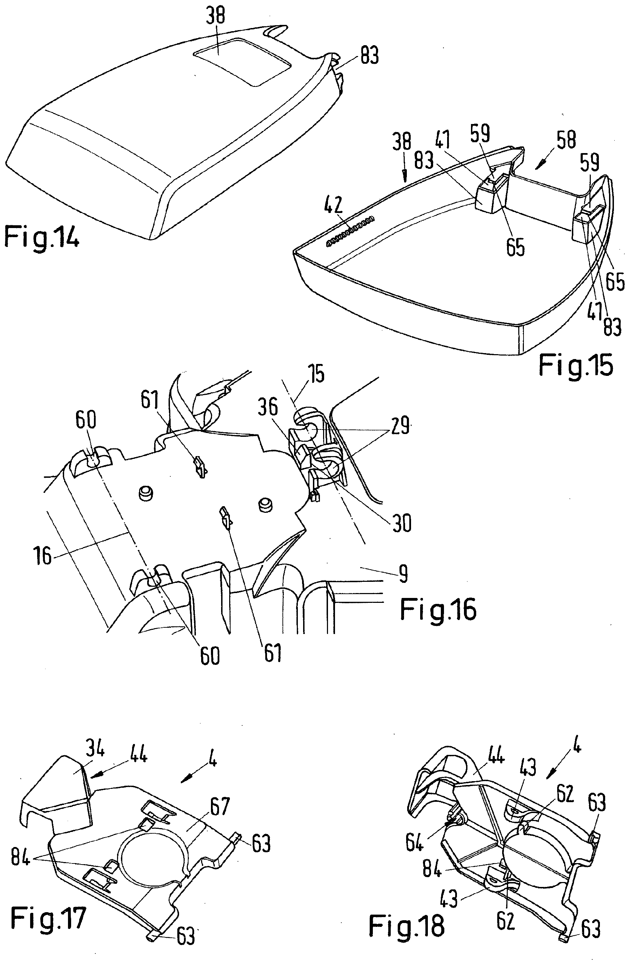

Die Klappe 5 ist aus einem ersten, in Fig. 10 gezeigten Teil 37 und einem zweiten, in den Figuren 14 und 15 gezeigten Teil 38 aufgebaut. Das erste Teil 37 weist den Lagerabschnitt 17 sowie zwei Arme 39 auf. Die Arme 39 dienen zur Verbindung mit dem zweiten Teil 38. Wie Fig. 10 zeigt, ist am Lagerabschnitt 17 eine Feder 53 angeordnet. Ein erster Schenkel 54 der Feder 53 stützt sich an einer Abstützung 56 des ersten Teils 37 ab. Im Ausführungsbeispiel ist die Abstützung 56 an einem Arm 39 des ersten Teils 37 angeformt. Wie Fig. 11 zeigt, besitzt die Feder 53 einen zweiten Schenkel 55, der sich an einer Abstützung 57 am Gehäuse 9 abstützt. Die Feder 53 wirkt zwischen dem ersten Teil 37 und dem Gehäuse 9 und spannt das erste Teil 37 in Richtung auf die vollständig geöffnete Stellung 51 der Klappe 5 vor.

Die Figuren 12 und 13 zeigen das erste Teil 37 im Einzelnen. Der Lagerabschnitt 17 besitzt zwei Lagerstellen 31 und 32, die voneinander beabstandet sind. Zwischen den Lagerstellen 31 und 32 ist der Anschlag 35 angeordnet. Der Lagerabschnitt 17 erstreckt sich von einem Arm 39 zum anderen Arm 39. Die Arme 39 ragen vom Lagerabschnitt 17 radial nach außen und liegen in der gleichen Ebene. Wie Fig. 13 zeigt, ist zwischen den Lagerstellen 31 und 32 eine Vertiefung 33 vorgesehen, die zur Aufnahme des ersten Magneten 21 dient. In Fig. 6 ist der Magnet 21 in der Vertiefung 33 gezeigt. Der Magnet 21 ist vorteilhaft in die Vertiefung 33 eingeklipst.

Wie die Figuren 12 und 13 auch zeigen, besitzt jeder Arm 39 an seinem dem Lagerabschnitt 17 abgewandt liegenden Bereich eine Rasterhöhung 40. Die Rasterhöhung 40 dient zur rastenden Verbindung des ersten Teils 37 mit dem zweiten Teil 38.

Wie Fig. 14 zeigt, bildet das erste Teil 37 den Bereich der Klappe 5, der das Display 6 und die Bedienelemente 7 und 8 abdeckt. Benachbart zur Schwenkachse 15 (Fig. 4) besitzt das erste Teil 38 zwei Aufnahmen 83, in die jeweils ein Arm 39 eingeschoben werden kann. Die Aufnahmen 83 sind an der dem Gehäuse 9 zugewandten Seite von Rastarmen 59 begrenzt, die an ihren freien Enden Rastränder 65 tragen. Die Rastränder 65 begrenzen jeweils eine Rastöffnung 41 der Aufnahmen 83. Durch die Rastöffnungen 41 ragt die Rasterhöhung 40, wie Fig. 8 zeigt. Im Bereich zwischen den Aufnahmen 83 weist das zweite Teil 38 eine Aussparung 58 auf. Im Bereich der Aussparung 58 sind in montiertem Zustand der Klappe 5 der Lagerabschnitt 17 und der Abschnitt 44 der Stopptaste 4 angeordnet, wie Fig. 11 zeigt.

Das zweite Teil 38 besitzt an seiner Innenseite außerdem eine Rastkontur 42, die zur Verrastung mit dem Gehäuse 9 dient. In der vollständig geschlossenen Stellung 50 der Klappe 5 ist die Rastkontur 42 am Gehäuse 9 eingerastet und hält die Klappe 5 entgegen der Kraft der Feder 53 (Fig. 10 und 11) in der geschlossenen Stellung 50 (Fig. 2). Wird das zweite Teil 38 um die Schwenkachse 15 verschwenkt, so gelangt die Rastkontur 42 außer Eingriff mit dem Gehäuse 9, und die Feder 53 drückt die Klappe 5 in ihre geöffnete Stellung 51, bis der Anschlag 35 an der Anschlagfläche 36 anliegt (Fig. 9). Wird das Arbeitsgerät 1 am zweiten Teil 38 der Klappe 5 hochgehoben, so löst sich die aus der Rasterhöhung 40 und dem Rastrand 65 der Öffnung 41 gebildete Rastverbindung. Die Rastverbindung ist dabei so ausgelegt, dass sie sich bei einer Kraft löst, die geringer als die Gewichtskraft des Arbeitsgeräts 1 ist, insbesondere geringer als die Gewichtskraft des Arbeitsgeräts 1 abzüglich des Gewichtes des zweiten Teils 38 der Klappe 5. Wenn sich die Verbindung zwischen dem ersten Teil 37 und dem zweiten Teil 38 gelöst hat, so schwenkt das erste Teil 37 aufgrund der Kraft der Feder 53 in die Stellung, die der geöffneten Stellung 51 der Klappe 5 entspricht. Dies wird vom ersten Hallsensor 22 erkannt. Die Antriebseinrichtung 19 und die Fahrantriebe 18 werden gestoppt, wenn der erste Hallsensor 22 erkennt, dass die Klappe 5 geöffnet ist oder das erste Teil 37 in der Position steht, die der geöffneten Stellung 51 der Klappe 5 zugeordnet ist. Die Fahrantriebe 18 und die Antriebseinrichtung 19 werden auch gestoppt, wenn der zweite Hallsensor 24 das Drücken der Stopptaste 4 erkennt oder die Hallsensoren 45,46 und 47 eine Bewegung der Haube 2 gegenüber dem Gehäuse 9 feststellen. Wird die Haube 2 nach unten gedrückt, so gelangt die Haube 2 zur Anlage auf den Grundkörper 67 der Stopptaste 4 (Fig. 5), so dass die Stopptaste 4 betätigt wird. Auch dann werden die Antriebseinrichtung 19 und die Fahrantriebe 18 abgeschaltet. Es kann auch vorgesehen sein, nur die Fahrantriebe 18 oder nur die Antriebseinrichtung 19 zu stoppen, wenn einer der Hallsensoren 22, 24, 45, 46, 47 das Öffnen der Klappe 5, das Betätigen der Stopptaste 4 oder ein Verschieben der Haube 2 erkennt.

Fig. 16 zeigt die Lagerung für das erste Teil 37 der Klappe 5 und die Stopptaste 4 am Gehäuse 9 im Einzelnen. Das Schwenklager 28 der Klappe 5 wird durch am Gehäuse 9 angeformte Aufnahmen 29 gebildet. Die Aufnahmen 29 sind zu der der Schwenkachse 16 der Stopptaste 4 zugewandten Seite hin offen. Die Öffnungen 30 der Aufnahmen 29 sind dem Grundkörper 67 der Stopptaste 4 zugewandt, wie Fig. 5 zeigt. Über die Öffnungen 30 kann der Lagerabschnitt 17 mit seinen Lagerstellen 31 und 32 an den Aufnahmen 29 eingeklipst werden. Die Stopptaste 4 übergreift mit ihrem Abschnitt 44 die Öffnungen 30 und verschließt diese. Dadurch kann der Lagerabschnitt 17 nicht unbeabsichtigt aus den Auf nahmen 29 gelangen.

Wie Fig. 16 auch zeigt, besitzt das Gehäuse 9 Lageraufnahmen 60, die Teil des Schwenklagers 11 (Fig. 2) für die Stopptaste 4 sind und in denen die Stopptaste 4 um die Schwenkachse 16 schwenkbar gelagert ist. Im Bereich zwischen den Lageraufnahmen 60 und den Aufnahmen 29 für den Lagerabschnitt 17 sind Halter 61 am Gehäuse 9 angeformt, die als Rasthaken ausgebildet sind. Wie die Figuren 17 und 18 zeigen, besitzt die Stopptaste zwei Öffnungen 84, in denen jeweils ein Halter 61 einrastet. Die Halter 61 halten die Stopptaste 4 entgegen der Kraft der Federelemente 43 in ihrer unbetätigten Stellung 80. Dadurch kann die Stopptaste 4 nicht noch weiter nach oben schwenken und die Öffnungen 30 der Auf nahmen 29 (Fig. 16) freigeben. Benachbart zu den Öffnungen 84 sind Stege 62 vorgesehen, die sich in Richtung auf das Gehäuse 9 erstrecken und Anschläge für die Stopptaste 4 bilden. Benachbart zu den Öffnungen 84 sind Federelemente 43 der Stopptaste 4 angeformt. Die Stopptaste 4 besitzt an ihrem Grundkörper 67 zwei nach außen ragende Lagerstutzen 63, die zur Lagerung in den Lageraufnahmen 60 (Fig. 16) vorgesehen sind. Wie Fig. 18 auch zeigt, besitzt die Stopptaste 4 am Abschnitt 44 eine Aufnahme 64 für den zweiten Magneten 23.

Fig. 20 zeigt schematisch die an den Hallsensoren 22 und 24 gemessenen Messwerte y in Abhängigkeit des Schwenkwinkels α der Klappe 5. Die Kurve 70 zeigt die Messwerte y des ersten Hallsensors 22 bei unbetätigter Stellung 80 der Stopptaste 4, also beim Verschwenken der Klappe 5 aus der in den Figuren 5 und 6 gezeigten Stellung in die in den Figuren 8 und 9 gezeigte Stellung. Die Kurve 71 zeigt die Messwerte y des ersten Hallsensors 22 bei betätigter Stellung 81 (Fig. 7) der Stopptaste 4. Wie Fig. 20 zeigt, hat die Stellung der Stopptaste 4 nur einen geringen Einfluss auf die Messwerte y, die der erste Hallsensor 22 liefert. Die Messwerte y fallen beim Verschwenken der Klappe 5, also bei zunehmendem Schwenkwinkel α, jedoch deutlich und über einen weiten Bereich des Schwenkwinkel α näherungsweise linear ab. Liegt der vom ersten Hallsensor 22 gemessene Messwert oberhalb eines Schwellwertes i in einem Bereich 72, so wird der erste Hallsensor 22 in einer Steuerung des Arbeitsgeräts 1 als defekt bewertet, und der Fahrantrieb 18 und die Antriebseinrichtung 19 werden abgeschaltet. Liegt der Messwert y zwischen dem Schwellwert i und einem zweiten Schwellwert h in einem Bereich 73, so wird die Klappe 5 in der Steuerung als in der geschlossenen Stellung 50 stehend betrachtet. Der Schwellwert h kann geeignet gewählt werden und liegt im Ausführungsbeispiel so, dass die Klappe 5 bei Schwenkwinkeln α von deutlich unter 50° als geschlossen betrachtet wird. Der Schwellwert h kann geeignet gewählt werden, um Fertigungstoleranzen sicher auszugleichen und gleichzeitig eine weitgehend geöffnete Klappe zu ermitteln. Der Schwellwert h wird vorteilhaft so gewählt, dass bei Schwenkwinkeln α, bei denen die Klappe 5 als in der geschlossenen Stellung 50 stehend bewertet wird, die Bedienelemente 7 und 8 nicht betätigt werden können. Liegt der Messwert y des ersten Hallsensors 22 unterhalb des Schwellwertes h in einem Bereich 74, so wird die Klappe 5 als in der geöffneten Stellung 51 stehend betrachtet.

Die Kurven 75 und 76 zeigen Messwerte y des zweiten Hallsensors 24. Die Kurve 75 zeigt den Messwert y in betätigter Stellung 81 der Stopptaste 4. Wie Fig. 20 zeigt, ist der Messwert y weitgehend konstant und unabhängig von der Drehlage der Klappe 5. Die Kurve 76 zeigt den Messwert y in unbetätigter Stellung 80 der Stopptaste 4. In unbetätigter Stellung 80 der Stopptaste 4 sind die Messwerte y deutlich geringer als bei betätigter Stopptaste 4. Gleichzeitig verringert sich der Messwert y bei steigendem Schwenkwinkel α. Bei betätigter Stellung 81 der Stopptaste 4 wird der vom zweiten Hallsensor 24 gemessene Messwert y vom ersten Magneten 21 beeinflusst.

Liegt der Messwert y des zweiten Hallsensors 24 oberhalb eines Schwellwertes k in einem Bereich 77, so erkennt die Steuerung die Stopptaste 4 als in der betätigten Stellung 81 stehend. Liegt der Messwert y zwischen einem Schwellwert g und dem Schwellwert k in einem Bereich 78, so wird die Stopptaste 4 als in der unbetätigten Stellung 80 stehend erkannt. Die Schwellwerte g und h können etwa gleich groß sein. Der Schwellwert g kann auch oberhalb des Schwellwertes h liegen. Liegt der Messwert y des zweiten Hallsensors 24 unterhalb des Schwellwerts g in einem Bereich 79, so wird der zweite Hallsensor 24 als defekt erkannt.

## Patentansprüche

1. Selbstfahrendes Arbeitsgerät mit mindestens einem Fahrantrieb (18), und mit einem Gehäuse (9), wobei an dem Gehäuse (9) mindestens eine Klappe (5) schwenkbar gelagert ist, die in geschlossenem Zustand mindestens ein Bedienelement (7, 8) abdeckt, wobei die Klappe (5) einen Lagerabschnitt (17) aufweist, der im Bereich der Schwenkachse (15) der Klappe (5) angeordnet ist und an dem mindestens ein Schwenklager (28) für die Klappe (5) angeordnet ist,
**dadurch gekennzeichnet, dass** in dem Gehäuse (9) ein erster Hallsensor (22) zur Überwachung der Schwenkstellung der Klappe (5) angeordnet ist, und dass am Lagerabschnitt (17) der Klappe (5) mindestens ein erster Magnet (21) angeordnet ist, der sich beim Verschwenken der Klappe (5) um die Schwenkachse (15) der Klappe (5) dreht und dessen Magnetfeld von dem ersten Hallsensor (22) erfasst wird.

2. Arbeitsgerät nach Anspruch 1,
**dadurch gekennzeichnet, dass** am Gehäuse (9) eine Stopptaste (4) angeordnet ist, deren Position von einem im Gehäuse (9) angeordneten zweiten Hallsensor (24) überwacht wird und dass an der Stopptaste (4) mindestens ein zweiter Magnet (23) gehalten ist, dessen Magnetfeld von dem zweiten Hallsensor (24) erfasst wird.

3. Arbeitsgerät nach Anspruch 2,
**dadurch gekennzeichnet, dass** der zweite Magnet (23) zu dem ersten Magnet (21) einen Abstand (a) von weniger als 5 cm aufweist.

4. Arbeitsgerät nach Anspruch 2 oder 3,
**dadurch gekennzeichnet, dass** der erste Hallsensor (22) und der zweite Hallsensor (24) auf einer gemeinsamen Platine (25) im Gehäuse (9) angeordnet sind.

5. Arbeitsgerät nach einem der Ansprüche 2 bis 4,
**dadurch gekennzeichnet, dass** die Stopptaste (4) einen Abschnitt (44) aufweist, der den Lagerabschnitt (17) der Klappe (5) mindestens teilweise übergreift.

6. Arbeitsgerät nach Anspruch 5,
**dadurch gekennzeichnet, dass** das Schwenklager (28) der Klappe (5) eine Auf nahme (29) am Gehäuse (9) umfasst, wobei die Aufnahme (29) eine Öffnung (30) aufweist und wobei die Stopptaste (4) die Öffnung (30) mindestens teilweise abdeckt.

7. Arbeitsgerät nach einem der Ansprüche 4 bis 6,
**dadurch gekennzeichnet, dass** das Arbeitsgerät (1) eine beweglich gelagerte Haube (2) umfasst, wobei die Position der Haube (2) über eine im Gehäuse (9) angeordnete Erfassungseinrichtung (26) überwacht wird, wobei die Erfassungseinrichtung (26) mindestens einen dritten Hallsensor (45) umfasst.

8. Arbeitsgerät nach Anspruch 7,
**dadurch gekennzeichnet, dass** der mindestens eine dritte Hallsensor (45) auf der gemeinsamen Platine (25) des ersten Hallsensors (22) und des zweiten Hallsensors (24) angeordnet ist.

9. Arbeitsgerät nach einem der Ansprüche 1 bis 8,
**dadurch gekennzeichnet, dass** der Lagerabschnitt (17) an mindestens zwei Lagerstellen (31, 32) schwenkbar gelagert ist und dass der erste Magnet (21) zwischen den beiden Lagerstellen (31, 32) angeordnet ist.

10. Arbeitsgerät nach einem der Ansprüche 1 bis 9,
**dadurch gekennzeichnet, dass** der Lagerabschnitt (17) eine Vertiefung (33) auf weist, in der der erste Magnet (21) angeordnet ist.

11. Arbeitsgerät nach einem der Ansprüche 1 bis 10,
**dadurch gekennzeichnet, dass** die Klappe (9) in Richtung auf ihre geöffnete Stellung gefedert gelagert ist.

12. Arbeitsgerät nach einem der Ansprüche 1 bis 11,
**dadurch gekennzeichnet, dass** am Lagerabschnitt (11) ein Anschlag (35) ausgebildet ist, der mit dem Gehäuse (9) zusammenwirkt und die vollständig geöffnete Stellung der Klappe (5) definiert.

13. Arbeitsgerät nach einem der Ansprüche 1 bis 12,
**dadurch gekennzeichnet, dass** die Klappe (5) zwischen der vollständig geschlossenen Stellung (50) und der vollständig geöffneten Stellung (51) einen Schwenkwinkel (α) von etwa 70° bis etwa 110° zurücklegt.

14. Arbeitsgerät nach einem der Ansprüche 1 bis 13,
**dadurch gekennzeichnet, dass** der Fahrantrieb (18) und/oder eine Antriebseinrichtung (19) für mindestens ein Werkzeug des Arbeitsgeräts (1) bei nicht vollständig geschlossener Klappe ausgeschaltet ist.

## Claims

1. Self-propelled working implement, comprising at least one travelling drive (18) and a housing (9), wherein at least one flap (5) covering at least one control (7, 8) in the closed state is pivotably mounted on the housing (9), wherein the flap (5) has a bearing section (17), which is located in the region of the pivot axis (15) of the flap (5) and on which at least one pivot bearing (28) for the flap (5) is mounted,
**characterised in that** a first Hall sensor (22) is located in the housing (9) for monitoring the pivoting position of the flap (5), and **in that** at least one first magnet (21), which rotates when the flap (5) is pivoted about the pivot axis (15) of the flap (5) and the magnetic field of which is detected by the first Hall sensor (22), is located at the bearing section (17) of the flap (5).

2. Working implement according to claim 1,
**characterised in that** a stop button (4), the position of which is monitored by a second Hall sensor (24) located in the housing (9), is located on the housing (9), and **in that** at least one second magnet (23), the magnetic field of which is detected by the second Hall sensor (24), is held on the stop button (4).

3. Working implement according to claim 2,
**characterised in that** the second magnet (23) has a distance (a) of less than 5 cm from the first magnet (21).

4. Working implement according to claim 2 or 3,
**characterised in that** the first Hall sensor (22) and the second Hall sensor (24) are located on a common printed circuit board (25) in the housing (9).

5. Working implement according to any of claims 2 to 4,
**characterised in that** the stop button (4) has a section (44), which at least partially overlaps the bearing section (17) of the flap (5).

6. Working implement according to claim 5,
**characterised in that** the pivot bearing (28) of the flap (5) comprises a receptacle (29) on the housing (9), the receptacle (29) having an opening (30) and the stop button (4) at least partially covering the opening (30).

7. Working implement according to any of claims 4 to 6,
**characterised in that** the working implement (1) comprises a movably mounted hood (2), wherein the position of the hood (2) is monitored by a detection device (26) located in the housing (9), the detection device (26) comprising at least one third Hall sensor (45).

8. Working implement according to claim 7,
**characterised in that** the at least one third Hall sensor (45) is located on the common printed circuit board (25) of the first Hall sensor (22) and the second Hall sensor (24).

9. Working implement according to any of claims 1 to 8,
**characterised in that** the bearing section (17) is pivotably mounted at at least two bearing points (31, 32), and **in that** the first magnet (21) is located between the two bearing points (31, 32).

10. Working implement according to any of claims 1 to 9,
**characterised in that** the bearing section (17) has a recess (33), in which the first magnet (21) is located.

11. Working implement according to any of claims 1 to 10,
**characterised in that** the flap (5) is spring-loaded towards its open position.

12. Working implement according to any of claims 1 to 11,
**characterised in that** a stop (35), which acts together with the housing (9) and defines the fully open position of the flap (5), is formed on the bearing section (11).

13. Working implement according to any of claims 1 to 12,
**characterised in that** the flap (5) covers a pivot angle (α) of approximately 70° to 110° between the fully closed position (50) and the fully open position (51).

14. Working implement according to any of claims 1 to 13,
**characterised in that** the travelling drive (18) and/or a drive device (19) for at least one tool of the working implement (1) is/are switched off if the flap is not closed completely.

## Revendications

1. Dispositif de travail automoteur avec au moins un entraînement de roulement (18) et un carter (9), au moins un abattant (5) qui, à l'état fermé, recouvre au moins un élément de commande (7, 8) étant monté pivotant sur le carter (9), l'abattant (5) comportant une section formant palier (17) qui est disposée dans la zone de l'axe de pivotement (15) de l'abattant (5) et sur laquelle est disposé au moins un palier de pivotement (28) pour l'abattant (5),
**caractérisé en ce qu'**il est prévu dans le carter (9) un premier capteur à effet Hall (22) pour surveiller la position de pivotement de l'abattant (5), et **en ce qu'**il est prévu sur la section formant palier (17) de l'abattant (5) au moins un premier aimant (21) qui, lors du pivotement de l'abattant (5), tourne sur l'axe de pivotement (15) dudit abattant (5) et dont le champ magnétique est détecté par le premier capteur de Hall (22).

2. Dispositif de travail selon la revendication 1,
**caractérisé en ce qu'**il est prévu sur le carter (9) une touche d'arrêt (4) dont la position est surveillée par un deuxième capteur d'effet Hall (24) disposé dans le carter (9), et **en ce qu'**il est prévu, retenu sur ladite touche d'arrêt (4), au moins un deuxième aimant (23) dont le champ magnétique est détecté par le deuxième capteur d'effet Hall (24).

3. Dispositif de travail selon la revendication 2,
**caractérisé en ce que** le deuxième aimant (23) présente par rapport au premier aimant (21) un écartement (a) de moins de 5 cm.

4. Dispositif de travail selon la revendication 2 ou 3,
**caractérisé en ce que** le premier capteur d'effet Hall (22) et le deuxième capteur d'effet Hall (24) sont disposés dans le carter (9) sur une platine commune (25).

5. Dispositif de travail selon l'une des revendications 2 à 4,
**caractérisé en ce que** la touche d'arrêt (4) comporte une section (44) qui recouvre au moins en partie la section formant palier (17) de l'abattant (5).

6. Dispositif de travail selon la revendication 5,
**caractérisé en ce que** le palier de pivotement (28) de l'abattant (5) comprend un logement (29) sur le carter (9), le logement (29) présentant une ouverture (30), et la touche d'arrêt (4) couvrant au moins en partie ladite ouverture (30).

7. Dispositif de travail selon l'une des revendications 4 à 6,
**caractérisé en ce qu'**il comprend un capot (2) monté mobile, la position du capot (2) étant surveillée par l'intermédiaire d'un dispositif de détection (26) disposé dans le carter (9), et le dispositif de détection (26) comprenant au moins un troisième capteur d'effet Hall (45).

8. Dispositif de travail selon la revendication 7,
**caractérisé en ce que** le ou les troisièmes capteurs à effet Hall (45) sont disposés sur la platine commune (25) du premier capteur à effet Hall (22) et du deuxième capteur à effet Hall (24).

9. Dispositif de travail selon l'une des revendications 1 à 8,
**caractérisé en ce que** la section formant palier (17) est montée pivotante sur au moins deux points de palier (31, 32), et **en ce que** le premier aimant (21) est disposé entre les deux points de palier (31, 32).

10. Dispositif de travail selon l'une des revendications 1 à 9,
**caractérisé en ce que** la section formant palier (17) présente un creux (22) dans lequel est disposé le premier aimant (21).

11. Dispositif de travail selon l'une des revendications 1 à 10,
**caractérisé en ce que** l'abattant (9) est monté à ressort en direction de sa position ouverte.

12. Dispositif de travail selon l'une des revendications 1 à 11,
**caractérisé en ce qu'**il est prévu, formée sur la section formant palier (11), une butée (35) qui coopère avec le boîtier (9) et qui définit la position complètement ouverte de l'abattant (5).

13. Dispositif de travail selon l'une des revendications 1 à 12,
**caractérisé en ce que** l'abattant (5) décrit entre la position complètement fermée (50) et la position complètement ouverte (51) un angle de pivotement (α) d'environ 70° à environ 110°.

14. Dispositif de travail selon l'une des revendications 1 à 13,
**caractérisé en ce que** l'entraînement de roulement (18) et/ou un dispositif d'entraînement (19) pour au moins un outil du dispositif de travail (1) sont arrêtés quand l'abattant n'est pas complètement fermé.
